# EUROPEAN PATENT SPECIFICATION

(11) **EP 1 675 201 B1**
(45) Date of publication and mention of the grant of the patent: **15.09.2010**
(21) Application number: 05257976.0
(22) Date of filing: 22.12.2005
(51) Int. Cl.: H01M 8/10

(54) **Proton conductor, polymer electrolyte comprising the same and fuel cell employing the polymer electrolyte**
Protonenleiter, daraus hergestellter Polymerelektrolyt und Brennstoffzelle mit diesem Polymerelektrolyt
Conducteur de protons, électrolyte polymère le comprenant et pile à combustible utilisant cet électrolyte polymère

(30) Priority: 24.12.2004 KR 2004112237
(43) Date of publication of application: 28.06.2006
(73) Proprietor: Samsung SDI Co., Ltd., Suwon-Si Gyeonggi-do 443-742 (KR)
(72) Inventor: Sun, Hee-young, Yongin-si, Gyeonggi-do (KR); Cho, Myung-dong, Hwaseong-si, Gyeonggi-do (KR); Lee, Myung-jin, Yongin-si, Gyeonggi-do (KR)
(74) Representative: Zijlstra, Robert Wiebo Johan

(56) References cited:
- EP-A- 0 306 802
- WO-A-01/29291
- WO-A-01/63683
- WO-A-99/54129
- US-A1- 2004 062 972
- RENE PLEHNERT, JÖRG ANDREAS SCHRÖTER, CARSTEN TSCHIERSKE: "Synthesis and thermotropic liquid crystalline properties of calamitic molecules with laterally attached hydrophilic groups: Y-shaped three-block molecules which can form smectic and columnar mesopases" J.MATER.CHEM., vol. 8, 1998, pages 2611-2626, XP002500523

## Description

The present invention relates to a proton conductor, a polymer electrolyte comprising the same and a fuel cell employing the polymer electrolyte, and more particularly, to a proton conductor having sufficient ionic conductivity under high temperatures and no-humidifying conditions, a polymer electrolyte comprising the same and a fuel cell employing the polymer electrolyte.

Fuel cells can be classified into polymer electrolyte membrane fuel cells (PEMFCs), phosphoric acid fuel cells (PAFCs), molten carbonate fuel cells (MCFCs), solid oxide fuel cells (SOFCs), and other kinds depending on the electrolyte type. The working temperature of the fuel cells and constituent materials therefor vary depending on the electrolyte type.

The basic PEMFC includes an anode (fuel electrode), a cathode (oxidizing agent electrode), and a polymer electrolyte membrane interposed between the anode and the cathode. The anode includes a catalyst layer for promoting the oxidation of a fuel and the cathode includes a catalyst layer for promoting the reduction of an oxidizing agent.

Examples of the fuel supplied to the anode include hydrogen, a hydrogen-containing gas, a mixture of methanol vapor and water vapor, an aqueous methanol solution, etc. Examples of the oxidizing agent supplied to the cathode include oxygen, an oxygen-containing gas and air.

On the anode of the PEMFC, a fuel is oxidized to produce protons and electrons. The protons migrate to the cathode through an electrolyte membrane and the electrons migrate to an external circuit (load) through a conductive wire (or current collector). On the cathode of the PEMFC, the migrated protons react with the electrons, which are supplied from the external circuit through another conductive wire (or current collector), and oxygen to produce water. Here, the migration of electrons to the cathode via the external circuit from the anode generates electric power.

In the PEMFC, the polymer electrolyte membrane acts as an ionic conductor for the migration of protons from the anode to the cathode and also as a separator for preventing mechanical contact between the anode and the cathode. Thus, the polymer electrolyte membrane requires sufficient ionic conductivity, electrochemical safety, high mechanical strength, and thermal stability at an operating temperature and should be easily thin-layered.

The polymer electrolyte membrane is generally composed of a sulfonated perfluorinated polymer having fluorinated alkylene in the backbone and fluorinated vinylether side chains with sulfonic acid at its terminal, such as Nafion manufactured by Dupont. Such a polymer electrolyte membrane contains a proper amount of water, and thus, has sufficient ionic conductivity.

However, this polymer electrolyte membrane has a seriously lowered ionic conductivity at operating temperatures of 100°C or higher due to a loss of moisture by evaporation, and thus, it does not act as an electrolyte membrane. Thus, it is virtually impossible to operate the PEMFC using the polymer electrolyte membrane under atmospheric pressure at 100°C or higher. Conventional the PEMFCs have been operated at 100°C or lower, for example, at about 80°C.

To raise the operating temperature of the PEMFC to 100°C or higher, a method providing the PEMFC with a humidification apparatus, a method operating the PEMFC under a pressurized condition and a method using a polymer electrolyte without requiring humidification, etc. have been proposed.

When the PEMFC was operated under a pressurized condition, the boiling point of water increases, and thus the operating temperature can be raised. However, an application of a pressurizing system or a provision of a humidification apparatus increases the size and weight of the PEMFC and reduces the overall efficiency of the power generating system. Thus, to broaden the range of utilization of the PEMFC, demands to a "no-humidifying polymer electrolyte membrane", i.e., a polymer electrolyte membrane having sufficient ionic conductivity even at no-humidifying conditions are increasing.

In conventional fuel cells, proton conduction generally occurs by water and H₃P0₄.

However, such a fuel cell loses an ion conducting function due to the evaporation of water and has a poor performance of a membrane and electrode assembly (MEA) due to the adsorption of H₃PO₄ anions to a metal catalyst, such as Pt, under high temperatures and no-humidifying conditions.

The present invention provides a provided a polymer electrolyte including proton conductor capable of substituting water or H₃PO₄ and having sufficient high temperature stability and sufficient ionic conductivity under high temperatures and no-humidifying conditions, a method of preparing the polymer electrolyte, a membrane and electrode assembly (MEA) having an improved performance by employing the polymer electrolyte, and a fuel cell employing the MEA.

According to the present invention, there is provided a provided a polymer electrolyte according to claim 1 and a method of preparing the polymer electrolyte according to claim 4.

According to another aspect of the present invention, there is including: a proton conductor having a hydroxy group at a terminal end and an ether-based functional group at an a -carbon position; and a conducting polymer matrix.

According to another aspect of the present invention, there is provided a method of preparing a polymer electrolyte, the method including: pretreating a polymer matrix; and impregnating a proton conductor having a hydroxy group at a terminal end and an ether-based functional group at an α-carbon position into the pretreated polymer matrix to obtain the polymer electrolyte.

According to another aspect of the present invention, there is provided a fuel cell including a cathode, an anode, and the polymer electrolyte described above, interposed between the cathode and the anode.

At least one of the cathode and the anode includes a proton conductor having a hydroxy group at a terminal end and an ether-based functional group at an α-carbon position.

The above and other features and advantages of the present invention will become more apparent by describing in detail exemplary embodiments thereof with reference to the attached drawings in which:
FIG. 1 is an exploded perspective view of a fuel cell stack according to an embodiment of the present invention;

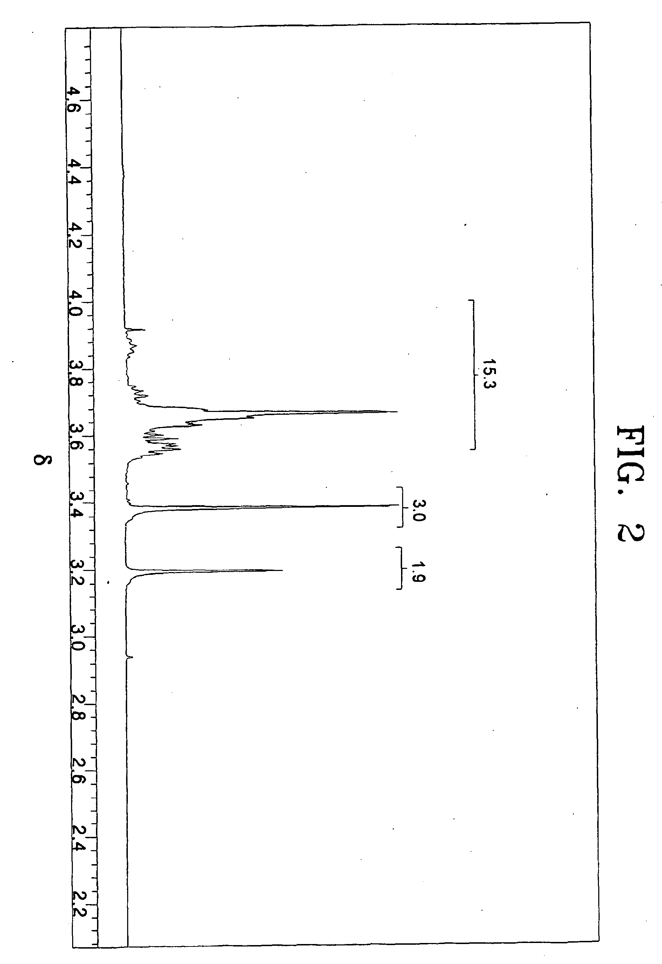

FIG. 2 is the nuclear magnetic resonance (NMR) spectrum of a compound represented by Formula (1) obtained in Synthesis Example 1 of the present invention;
FIG. 3 illustrates the impregnated amount of a proton conductor in a polymer electrolyte obtained in Reference Example 1 of the present invention;
FIG. 4 illustrates the proton conductivity of polymer electrolyte membranes prepared in Example 1 of the present invention and Comparative Examples 1 and 2, measured at no-humidifying conditions in atmospheric air while raising the temperature from 20 to 110°C; and
FIG. 5 illustrates the proton conductivity of polymer electrolyte membranes prepared in Example 1 of the present invention and Comparative Examples 1 and 2, measured at no-humidifying conditions and 110°C in atmospheric air with the passage of time.

Hereinafter, embodiments of the present invention will be described in more detail.

In the present invention, Nafion or a polymer matrix containing a sulfonyl group is used as a proton source and a compound having a high boiling point and having a terminal group capable of forming hydrogen bonds, i.e. hydroxy group to improve high temperatures stability is used as a charge carrier.

The proton conductor has a hydroxy group at a terminal end and an ether-based functional group at an a -carbon position. The proton conductor includes compounds which have a hydroxy group at a terminal to form hydrogen bonds and have a boiling point of 300°C or higher, and preferably 300 to 400°C. When water is used as a proton conductor under high temperatures and no-humidifying conditions, evaporation causes a loss of an ionic conducting property, whereas the proton conductor of the present invention maintains a proton conducting property even at 100°C or higher to improve a performance of an MEA. Further, property even at 100°C or higher to improve a performance of an MEA. Further,

when H₃PO₄ is used as the proton conductor, H₃PO₄ anions are adsorbed on the surface of a catalyst, such as Pt, to deteriorate a performance of an MEA, whereas the proton conductor of the present invention does not generate anions to prevent said problem.

Examples of the compound having the structure described above include 4,7,10,13-tetraoxatetradecane-1,2-diol represented by Formula (1) (hereinafter referred to as "TOTD-diol"), 1,4-anhydroerythritol represented by Formula (2), 2-hydroxymethyl-12-crown-4 represented by Formula (3) and glycerol formal represented by Formula (4):

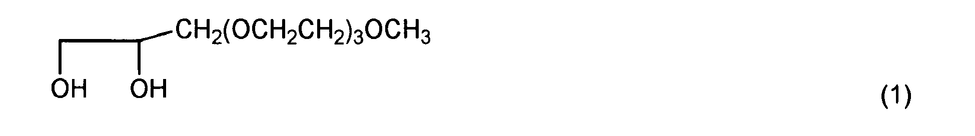

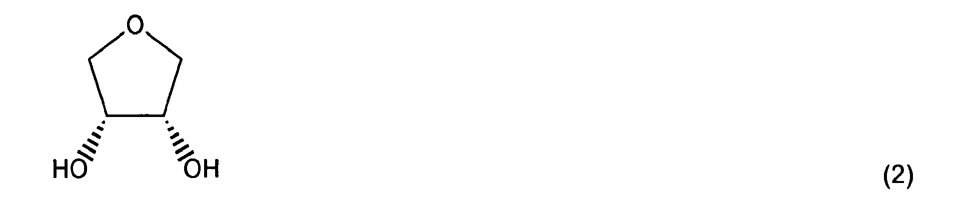

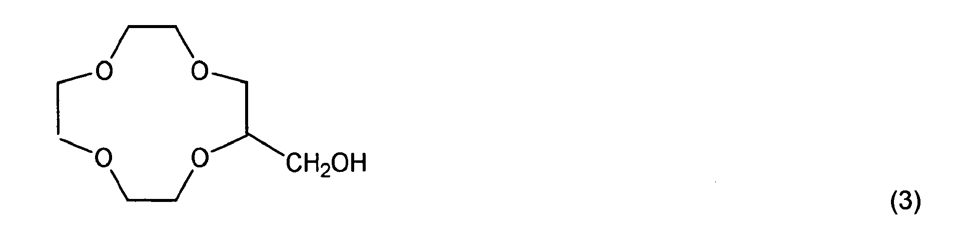

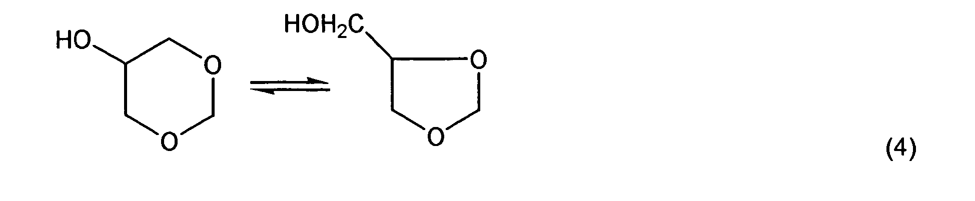

The boiling point of the compound represented by Formula (1) is 300°C; the flash point of the compound represented by Formula (2) is 230°F; that of the compound represented by Formula (3) is 115°C/0.04 mmHg, and that of the compound represented by Formula (4) is 192 to 193°C.

The proton conductor used in the present invention is preferably TOTD-diol represented by Formula (1), which has a strong intermolecular force due to the hydrogen bonding, and thus has a higher temperature stability at a low atmospheric pressure.

A method of preparing a polymer electrolyte according to an embodiment of the present invention will now be described in more detail.

First, a polymer matrix is pretreated. This pretreatment is a process for removing impurities in a conducting polymer membrane and activating a cation exchange site. Such a pretreatment can be carried out, for example, by washing the conducting polymer membrane with H₂O₂, immersing the washed conducting polymer membrane in diluted aqueous H₂SO₄ solution for a predetermined time, and washing the resultant with deionized water and drying it.

Nafion or a polymer membrane having a sulfonyl group or phosphoryl group is used as the polymer matrix. Nafion is a perfluorocarbon sulfonic acid cation exchange resin. In addition, polysulfone, perfluorocarboxylic acid, styrene-vinyl benzene sulfonic acid, etc. can be used as the polymer matrix.

The polymer matrix pretreated in this way is put into a container containing a proton conductor, such as TOTD-diol represented by Formula (1) to obtain a polymer electrolyte having the proton conductor impregnated into the polymer matrix.

The proton conductor can be let alone at 70 to 90°C before impregnating the proton conductor into the polymer matrix. This additional operation leads to a reduction in the impregnation time, uniform impregnation and an increase in the impregnated amount of the proton conductor, thereby improving ionic conductivity. an α -carbon position, impregnated into the conducting polymer matrix. The content of the proton conductor is preferably 10 to 300 parts by weight based on 100 parts by weight of the polymer matrix. When the content of the proton conductor is less than 10 parts by weight, the proton conducting property is poor. When the content of the proton conductor is greater than 300 parts by weight, the mechanical strength of a membrane is poor.

An operation mechanism of the polymer electrolyte of the present invention is as follows.

Nafion or a sulfonated polymer is used as the polymer matrix, a SO₃H group of the polymer matrix is used as a proton source, and the proton conductor, such as TOTD-diol represented by Formula (1), is used as a proton carrier instead of water.

When the polymer electrolyte of the present invention uses the proton conductor of the present invention, it operates by a vehicle mechanism. According to the vehicle mechanism, protons do not migrate by hopping between functional groups (sulfonyl groups), but are solvated by and migrate together in a liquid having excellent mobility, i.e. water or other solvents. This mechanism provides an electrolyte with superior proton conductivity.

The polymer electrolyte of the present embodiment is used as a polymer electrolyte membrane of a fuel cell and is interposed between a cathode and an anode to form an MEA.

The cathode and anode include a gas diffusion layer and a catalyst layer. The catalyst layer includes a metal catalyst to promote the relevant reactions (oxidation of hydrogen and reduction of oxygen). Preferably, the catalyst layer includes at least one catalyst selected from the group consisting of Pt, Ru, Os, a Pt-Ru alloy, a Pt-Os alloy, a Pt-Pd alloy and a Pt-M alloy (M is at least one transition metal selected from the group consisting of Ga, Ti, V, Cr, Mn, Fe, Co, Ni, Cu and Zn). More preferably, the catalyst layer includes at least one catalyst selected from the group consisting of Pt, Ru, Os, a Pt-Ru alloy, a Pt-Os alloy, a Pt-Pd alloy, a Pt-Co alloy and a Pt-Ni alloy.

The metal catalyst generally sits on a support. The support may be carbon, such as acetylene black or graphite, or inorganic particulates, such as alumina, silica. When a noble metal catalyst on a support is used, it is commercially available and may also be prepared by impregnating the noble metal into the support.

The gas diffusion layer may be made of a carbon paper or carbon cloth, but is not limited thereto. The gas diffusion layer supports an electrode of a fuel cell and diffuses a reaction gas into the catalyst layer. Preferably, the gas diffusion layer is made of a carbon paper or carbon cloth which is water-repelling treated with a fluorine-based resin such as polytetrafluoroethylene since it can prevent the lowering of the gas diffusion efficiency due to water produced when operating the fuel cell.

The electrodes can further include a microporous layer between the gas diffusion layer and the catalyst layer in order to further enhance the gas diffusion effect. The microporous layer is formed by applying a composition including a conducting material, such as carbon powder, carbon black, activated carbon or acetylene black, a binder, such as polytetrafluoroethylene, and, if necessary, an ionomer to the gas diffusion layer or the catalyst layer.

A fuel cell according to another embodiment of the present invention includes an MEA including electrodes disposed at both sides of the polymer electrolyte membrane; at least one electricity generation part which includes separators disposed at both sides of the MEA and generates electricity through the electrochemical reaction of hydrogen and oxygen; a fuel supply part for supplying a hydrogen containing fuel to the electricity generation part; and an oxygen supply part for supplying oxygen to the electricity generation part.

Separators are disposed at both sides of the MEA to form at least one electricity generation part by supplying both fuel and oxygen to the catalyst layer to generate electricity through the electrochemical reaction of hydrogen and oxygen. The electricity generation part is in the form of a stack.

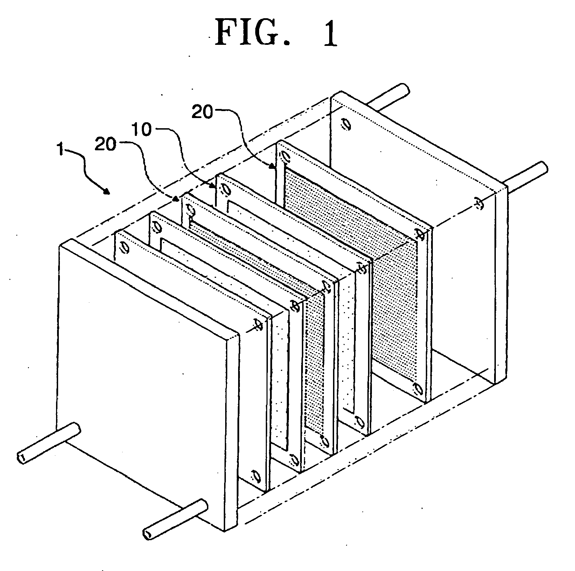

FIG. 1 is an exploded perspective view of such a stack. Referring to FIG. 1, a stack 1 includes a MEA 10 including the polymer electrolyte membrane of the present invention and separators 20 disposed at both sides of the MEA 10.

The electricity generation part includes the polymer electrolyte membrane, electrodes disposed at both sides of the polymer electrolyte membrane, and bipolar plates and generates electricity through the reaction of hydrogen and oxygen.

The fuel supply part supplies a hydrogen-containing fuel to the electricity generation part and the oxygen supply part supplies oxygen to the electricity-generation part.

The fuel cell of the present invention may be a phosphoric acid fuel cell (PAFC), a polymer electrolyte membrane fuel cell (PEMFC), or an alkaline fuel cell, and preferably a PAFC or a PEMFC.

The present invention will now be described in greater detail with reference to the following examples. The following examples are for illustrative purposes only and are not intended to limit the scope of the invention.

### Synthesis Example 1: Preparation of compound represented by Formula (1) Reaction Scheme 1

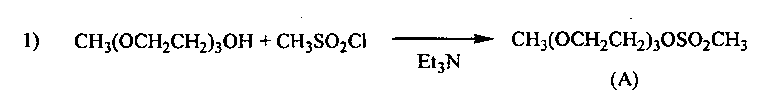

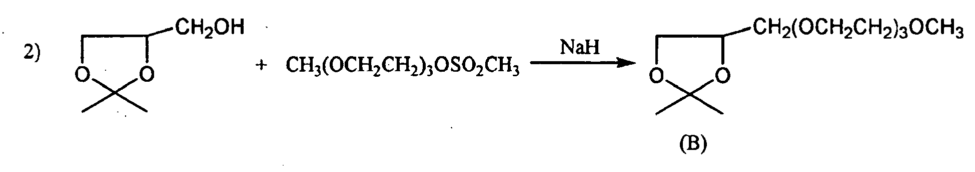

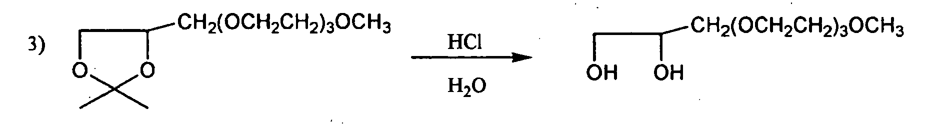

1) Synthesis of Compound (A)
   65 g of triethyleneglycol monoethyl ether and 42 g of methane sulfonyl chloride were dissolved in 400 ml of THF in an ice bath, and then 52 g of triethylamine was added thereto and reacted for 24 hrs. Once the reaction was completed, the product was dissolved in 300 ml of chloroform and washed with a small amount of a saturated NaCl solution. The resultant was separated into an aqueous layer and an organic layer. The solvent of the organic layer solvent was removed with an evaporator to obtain 59 g of a pale yellow liquid.
2) Synthesis of Compound (B)
   36 g of Solketal and 6.7 g of NaH were dissolved in 400 ml of 1,4-dioxane, and then 58 g of the Compound (A) obtained above was slowly added thereto and reacted for 18 hrs. The resulting salt was removed and the solvent was evaporated. Then, the resulting product was fractional distilled in vacuum to obtain 32 g of Compound (B) in a colorless liquid state.
3) Synthesis of Compound (C)
   31 g of the Compound (B) and 10 ml of a saturated HCI aqueous solution were dissolved in 100 ml of THF and stirred for 18 hrs. The reaction mixture was neutralized with a diluted NaOH solution to pH 5-6. Then, the resulting product was fractional distilled in vacuum to obtain 19 g of a colorless compound represented by Formula (1).
   The structure of the obtained compound could be identified through NMR spectrum of FIG. 1.

### Reference Example 1: Comparison of impregnated amount of proton conductor

Nafion 117 (available from Dupont) was cut into a proper size and washed with a 3 vol% H₂O₂ aqueous solution at 80°C for 1 hr. Then, a Na ion of functional group (-SO₃Na) of Nafion 117 was substituted by a proton using a 0.5 M H₂SO₄ solution at 80°C for 1 hr.

The substituted Nafion 117 was washed with distilled water. Then, the washed film was dried at 105°C for 3 hrs and stored in a dry room.

The obtained Nafion films were put into three containers containing TOTD-diol represented by Formula (1), deionized water and H₃P0₄, respectively, and said materials were impregnated into the Nafion 117 at 60°C for 1 hr to obtain polymer electrolytes. The content of the proton conductors in the polymer electrolytes was determined by measuring the weight of the polymer electrolytes after impregnating for 1 hr.

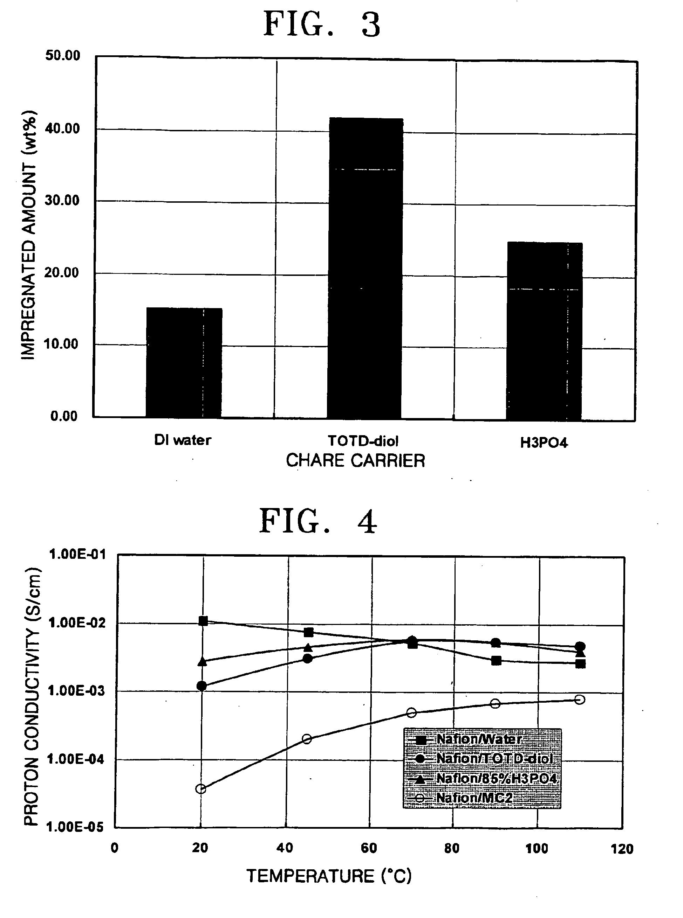

The content of the proton conductors in the polymer electrolytes was investigated and the results are illustrated in FIG. 3.

Referring to FIG. 3, the impregnated amount of TOTD-diol is greatest. When the weight is converted into a mole fraction, the impregnated amount of water was roughly 3 times greater than that of TOTD-diol.

### Example 1: Preparation of Polymer electrolyte and fuel cell

Nafion 117 (available from Dupont) was cut into a proper size and washed with a 3 vol% H₂O₂ solution at 80°C for 1 hr. Then, a Na ion of functional group (-S0₃Na) of Nafion 117 was substituted by a proton using a 0.5 M H₂SO₄ solution at 80°C for 1 hr.

The substituted Nafion 117 was washed with distilled water. Then, the washed film was dried at 105°C for 3 hrs and stored in a dry room.

A container containing TOTD-diol represented by Formula (1) was let alone at 80°C for 1 hr. Next, the Nafion 117 film obtained above was put into the container to impregnate TOTD-diol thereinto, thereby obtaining a polymer electrolyte.

In the meantime, a 99.99% Pt plate was used as an electrode.

A MEA including the electrode and the polymer electrolyte, and a fuel cell including the MEA were fabricated.

### Comparative Example 1

A polymer electrolyte membrane, an MEA and a fuel cell were fabricated in the same manner as in Example 1, except that water substituted TOTD-diol represented by Formula (1).

### Comparative Example 2

A polymer electrolyte membrane, an MEA and a fuel cell were fabricated in the same manner as in Example 1, except that an 85% H₃PO₄ aqueous solution substituted TOTD-diol represented by Formula (1).

The proton conductivities of the polymer electrolyte membranes prepared in Example 1 and Comparative Examples 1 and 2 was measured at about 0% relative humidity in atmospheric air while raising the temperature from 20 to 120°C and the results are illustrated in FIG. 4.

Referring to FIG. 4, at lower temperatures, the Nafion having water impregnated thereinto has the highest proton conductivity, but its proton conductivity decreases with temperature, which indicates its instability at higher temperatures.

Meanwhile, the Nafion having TOTD-diol impregnated thereinto has a proton conductivity that increases with temperature and its proton conductivity is higher than that of the Nafion having water impregnated thereinto at 70°C or higher. It can be seen from the results that TOTD-diol has a sufficient proton conducting property and thermal stability.

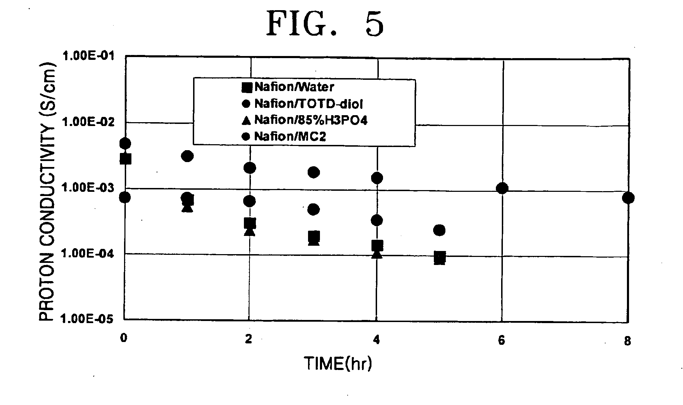

In addition, the proton conductivity of the polymer electrolyte membranes prepared in Example 1 and Comparative Examples 1 and 2 was measured at no-humidifying conditions and 110°C in atmospheric air and the results are illustrated in FIG. 5.

Referring to FIG. 5, water and H₃P0₄ lose their proton conducting property due to evaporation at high temperatures, whereas TOTD-diol has a superior stability at a higher temperature and proton conducting property over a board range of temperature.

The present invention provides a proton conductor having a hydroxy group at a terminal end and an ether-based functional group at an a -carbon position. The proton conductor can be used as a charge carrier instead of water or H₃PO₄ to provide a polymer electrolyte operable at 110°C or higher, having thermal stability and sufficient proton conductivity under high temperatures and no-humidifying conditions. The polymer electrolyte can be used to prepare an MEA that can operate under high temperatures and no-humidifying conditions and eliminate the need for moisture control to achieve simplicity, high efficiency and a longer lifespan of a system.

## Claims

1. A polymer electrolyte for a fuel cell comprising: a proton conductor having a hydroxy group at a terminal end and an ether-based functional group at an α-carbon position; and a conducting polymer matrix, **characterized in that** the proton conductor is at least one compound selected from the group consisting of 4,7,10,13-tetraoxatetradecane-1,2-diol, 1,4-anhydroerythritol, 2-hydroxymethyl-12-crown-4 and glycerol formal present in 10 to 300 parts by weight based on 100 parts by weight of the polymer matrix.

2. The polymer electrolyte of clam 1, wherein the proton conductor is 4,7,10,13-tetraoxatetradecane-1,2-diol.

3. The polymer electrolyte of claim 1, wherein the polymer matrix comprises Nafion.

4. A method of preparing the polymer electrolyte for fuel cell according to claim 1, 2 or 3, comprising:
pretreating a polymer matrix by removing impurities and activating a cation exchange site; and
impregnating a proton conductor having a hydroxy group at a terminal end and an ether-based functional group at an α-carbon position into the pretreated polymer matrix to obtain the polymer electrolyte, **characterized in that** the the proton conductor is at least one compound selected from the group consisting of 4,7,10,13-tetraoxatetradecane-1,2-diol, 1,4-anhydroerythritol, 2-hydroxymethyl-12-crown-4 and glycerol formal present in 10 to 300 parts by weight based on 100 parts by weight of the polymer matrix.

5. The method according to claim 3, wherein the pretreating of a polymer matrix is carried out by washing the polymer matrix with an aqueous H₂O₂ solution, immersing it in an aqueous H₂SO₄ solution for a predetermined time, and then washing the resultant with deionized water and drying.

6. A fuel cell comprising a cathode, an anode, and the polymer electrolyte according to claim 1, 2 or 3 interposed between the cathode and the anode.

## Patentansprüche

1. Polymerelektrolyt für eine Brennstoffzelle, umfassend: einen Protonenleiter mit einer Hydroxygruppe an einem terminalen Ende und einer Ether-basierten funktionellen Gruppe an einer α-Kohlenstoff-Position; und eine leitfähige Polymermatrix, **dadurch** charakterisiert, dass der Protonenleiter zumindest eine Verbindung ist, ausgewählt aus der Gruppe bestehend aus 4,7,10,13-Tetraoxatetradecan-1,2-diol, 1,4-Anhydroerythritol, 2-Hydroxymethyl-12-Krone-4 und Glycerinformal vorhanden in 10 bis 300 Gewichtsteilen, bezogen auf 100 Gewichtsteile der Polymermatrix.

2. Polymerelektrolyt gemäß Anspruch 1, wobei der Protonenleiter 4,7,10,13-Tetraoxatetradecan-1,2-diol ist.

3. Polymerelektrolyt gemäß Anspruch 1, wobei die Polymermatrix Nafion umfasst.

4. Verfahren zur Herstellung des Polymerelektrolyten für eine Brennstoffzelle gemäß Anspruch 1, 2 oder 3, umfassend:
Vorbehandeln einer Polymermatrix durch Entfernen von Verunreinigungen und Aktivieren einer Kationenuustauschstelle; und
Imprägnieren eines Protonenleiters mit einer Hydroxygruppe an einem terminalen Ende und einer Ether-basierten funktionellen Gruppe an einer α-Kohlenstoff-Position in die vorbehandelte Polymermatrix unter Erhalt des Polymerelektrolyten, **dadurch** charakterisiert, dass der Protonenleiter mindestens eine Verbindung ist, ausgewählt aus der Gruppe, betstehend aus 4,7,10,13-Tetraoxatetradecan-1,2-diol, 1,4-Anhydroerythritol, 2-Hydroxymethyl-12-Krone-4 und Glycerinformal vorhanden in 10 bis 300 Gewichtsteilen, bezogen auf 100 Gewichststeile der Polymermatrix.

5. Verfahren gemäß Anspruch 3, wobei das Vorbehandeln einer Polymermatrix ausgeführt wird durch Waschen der Polymermatrix mit wässriger H₂O₂-Lösung, Eintauchen derselben in wässrige H₂SO₄-Lösung für eine vorbestimmte Zeit und anschließend Waschen des Produkts mit entionisiertem Wasser und Trocknen.

6. Brennstoffzelle, umfassend eine Kathode, eine Anode und den Polymerelektrolyten gemäß Anspruch 1, 2 oder 3, angeordnet zwischen die Kathode und die Anode.

## Revendications

1. Electrolyte polymère pour une pile à combustible comprenant : un conducteur des protons comportant un groupe hydroxy à une extrémité terminale et un groupe fonctionnel à base d'éther en une position de carbone en a; et une matrice polymère conductrice, **caractérisé en ce que** le conducteur des protons est au moins un composé choisi dans le groupe consistant en le 4,7,10,13-tétraoxatétradécane-1,2-diol, le 1,4-anhydroérythritol, le 2-hydroxyméthyl-12-couronne-4 et le glycérol formal présent à hauteur de 10 à 300 parties en poids pour 100 parties en poids de la matrice polymère.

2. Electrolyte polymère selon la revendication 1, dans lequel le conducteur des protons est le 4,7,10,7.3-tétraoxatétradécarte-1,2-diol.

3. électrolyte polymère selon la revendication 1, dans lequel la matrice polymère comprend du Nafion.

4. Procédé de préparation de l'électrolyte polymère pour une pile à combustible selon la revendication 1, 2 ou 3, comprenant les étapes consistant à :
prétraiter une matrice polymère en éliminant les impuretés et en activant un site d'échange de cations ; et
imprégner un conducteur des protons comportant un groupe hydroxy à une extrémité terminale et un groupe fonctionnel à base d'éther en une position de carbone en α dans la matrice polymère prétraitée pour obtenir l'électrolyte polymère, **caractérisé en ce que** le conducteur des protons est au moins un composé choisi dans le groupe consistant en le 4,7,10,13-tétraoxatétradécane-1,2-diol, le 1,4-anhydroérythritol, le 2-hydroxyméthyl-12-couronne-4- et le glycérol formal présent à hauteur de 10 à 300 parties en poids pour 100 parties en poids de la matrice polymère,

5. Procédé selon la revendication 3, dans lequel le prétraitement d'une matrice polymère est réalisé en lavant la matrice polymère avec une solution aqueuse de H₂O₂, en l'immergeant dans une solution aqueuse de H₂SO₄ pendant une durée prédéterminée, puis en lavant le produit résultant avec de l'eau désionisée et en le séchant.

6. Pile à combustible comprenant une cathode, une anode, et l'électrolyte polymère selon la revendication 1, 2 ou 3, interposé entre la cathode et l'anode.
